# EUROPEAN PATENT APPLICATION

(11) **EP 1 280 079 A1**
(43) Date of publication of application: **29.01.2003**
(21) Application number: 01118149.2
(22) Date of filing: 26.07.2001
(51) Int. Cl.: G06F 17/60

(54) **Computer based system and method for trading tangible goods via an electronic communication system**

(71) Applicant: PAPIERFABRIK SCHOELLER & HOESCH GMBH & CO. KG, 76593 Gernsbach (DE)
(72) Inventor: Sick, Stefan, 76534 Baden-Baden (DE); Blum, Horst, 76593 Gernsbach (DE); Ruckenbrod, Werner, 76596 Forbach (DE); Parrini, Dante, Spring Grove, PA 17362 (US); Knappertsbusch, Moritz, 76530 Baden-Baden (DE)
(74) Representative: Henkel, Feiler, Hänzel

(57) **Abstract**

A computer based method and system for trading tangible goods that involve higher logistic tasks via an electronic communication system including automated freight calculations in generation of customer specific offers. The system comprises a product database which is regularly updated with relevant data related to the goods that are to be traded and a freight database which is regularly updated with relevant data related to the transportation of the goods traded through the system. A server automatically generates upon request of a client through the electronic communication system a product list of available products based on the product database and transmits the same to the client. The server can then receive a particular request for a particular product from the client and at least information on a particular destination location for the transportation of the particular product. By reference to the product database and the freight database the server determines the transportation cost for the particular product to the particular destination location, creates a client specific offer for the product comprising at least the transportation cost and the product cost, and transmits the offer back to the client through said electronic communication system.

## Description

### TECHNICAL FIELD

The present invention relates to a computer based method and system for trading tangible goods via an electronic communication system. It is particularly directed to automatically generating customer specific offers including automated freight calculations of tangible goods over the Internet, i.e. of products that involve higher logistic tasks so that transportation/freight is a relevant factor that influences delivery availability and cost. Such goods are for example paper rolls for printing machines, wood or other construction materials or chemical materials in industrial scale. In a preferred embodiment it may include means for selecting the most preferred among several feasible solutions to the specific logistic task related to a potential order related to every single offer.

### BACKGROUND OF THE INVENTION

The transportation costs for tangible goods of the type mentioned above depend on the availability of appropriate transportation capacities in the desired time frame and the applicable freight rates of a particular transportation task.

Freight rates generally depend on numerous criteria. Among those the most important are:
the type of goods and/or the specific requirements for loading, unloading, handling and storing of these goods, the volumes and/or the weights of goods, the speed and/or the means of transportation, the distance and/or the correlated costs for energy, the frequencies and/or the usage of free freight capacity at a defined time, the legal restrictions and the national legislations in the country of dispatch and of arrival for the goods and every national or international space in between.

It is known that due to differences in at least one of the numerous criteria having an impact on costs, the underlying cost structure for every single logistic task is specific and affects as well as is affected by other logistic activities.

The modification of offers allows to reduce freight costs. Possibilities are to adapt quantities to the cheapest possible freight unities, to extend or to shorten delivery times using free transportation capacities, to use opportunities for bulk breaking (one pickup of goods at a place of dispatch and delivery to different destination locations), to use possibilities for bundling (to combine deliveries from different sources.)

However, to coordinate the information required to modify an offer in order to achieve the best cost structure requires in a traditional trading situation numerous interactions between the three involved parties: the seller, the forwarding agent or transporting agent and the buyer. Furthermore, the cost and time involved in this pre-sales process is particularly problematic as only a share of offers lead to an order.

As a consequence the coordination costs are in many cases too high to justify for every single offer the efforts of finding the optimal individual logistic solution and of determining the true costs of the product for the buyer.

The upcoming business model of "anonymous trading" via electronic communication systems or networks like the Internet is directed to reduce the costs of the pre-sales process in order to provide a more direct access to the product information but makes the accurate determination of freight rates extremely difficult or impossible, since in this case buyers and sellers can't identify each other by their offer or request for quotation.

It is therefore an object of the present invention to provide, specifically for tangible goods that involve higher logistic tasks, a computer based method and system for trading via an electronic communication system including automated freight calculations in generation of customer specific offers.

According to the present invention this object is solved by a system as defined in claim 1 and by a method as defined in claim 10. Preferred embodiments or variations of the invention are defined in the dependent claims and recited in the specification.

In the following the invention will be explained in greater detail by reference to the appended drawing in which:
Fig. 1 is a diagram of the general system layout; and
Fig. 2A to 2C are a high level flow diagram of the trading process including the automated freight calculations in generation of customer specific offers.

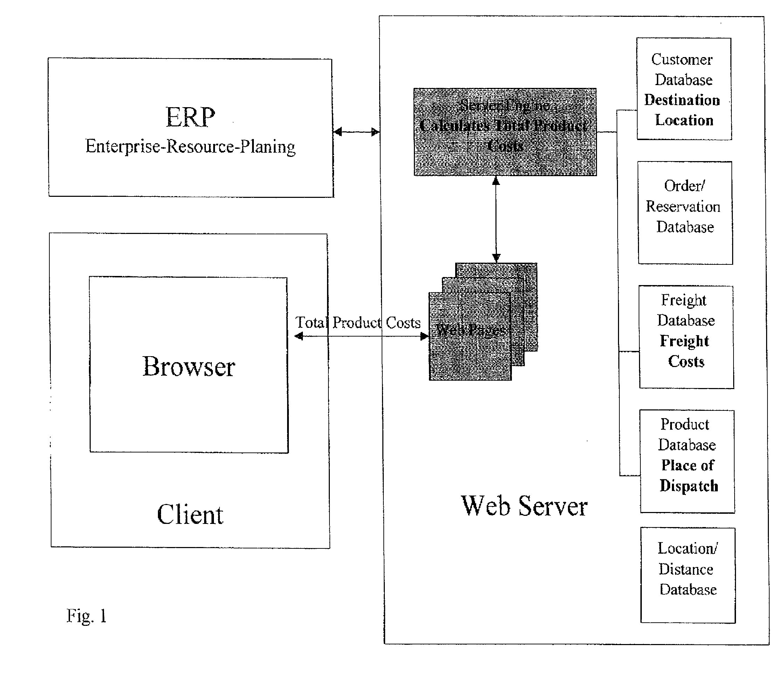

The computer based trading system of the invention as shown in Fig. 1 comprises a plurality of potential customers referred to as "clients" and at least'one vendor or operator of the market place referred to as the "Server" or "Server Engine - SE" as well as suppliers for the tangible goods and transportation services potentially demanded by the clients referred to as "Enterprise Resource Planing - ERP". These are interconnected, interact and exchange information via state of the art electronic communication systems, i.e. a communication link, which may include transmission over the Internet or via LAN (Local Area Network)) or WAN (Wide Area Network). The language of communication may include HTML or XML or other suitable communication languages/protocols. The information may also be sent via an email.

In the system and method of the invention the Server operates and maintains or provides access to at least a Customer Database (C-DB), a Product Database (P-DB), an Order/Reservation Database (O/R-DB) and a Freight Database (F-DB). It may further comprise or provide access to a Location/Distance Database (L/D-DB) and other relevant supporting sources of information and data. The Databases in this context represent a functional or logical allocation of data/information and not necessarily a physical allocation.

One or several freight company(ies) constantly fill and update the Freight Database with the relevant details of their services to enable current and future shipments of the goods traded in the system, i.e. transport capacities, time/availability, transportation cost, available routes or destinations etc.. Likewise, one or several suppliers or manufacturers fill and update the Product Database on a constant basis with the relevant information related to the goods/products that are to be traded through the system, i.e. type of product/good, specific amounts, availability dates, place of dispatch etc..

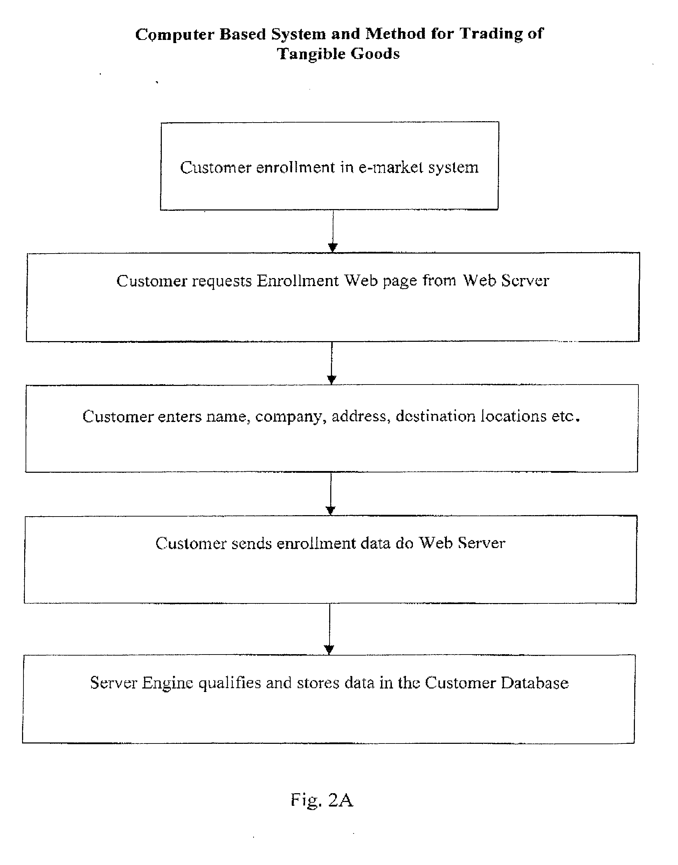

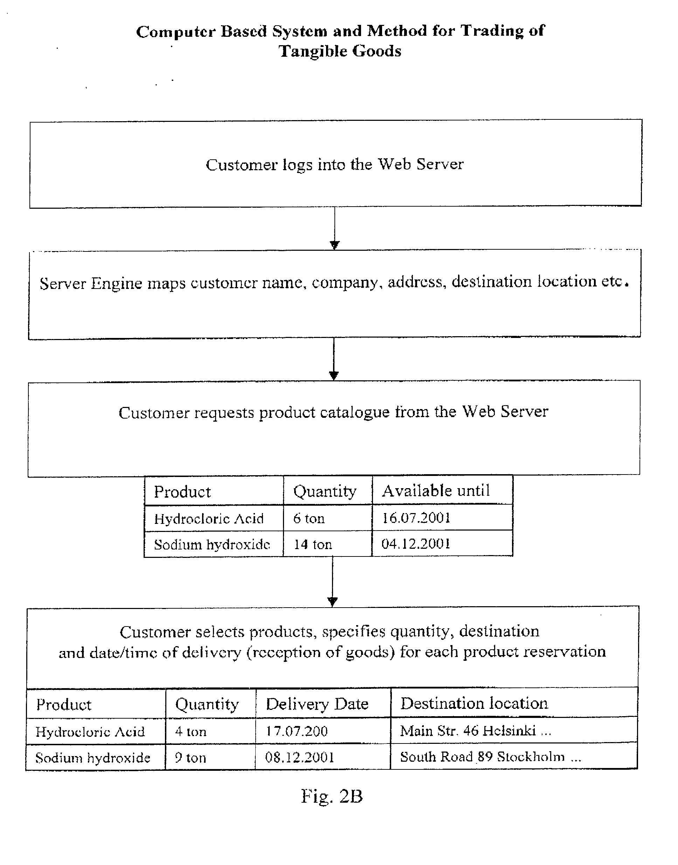

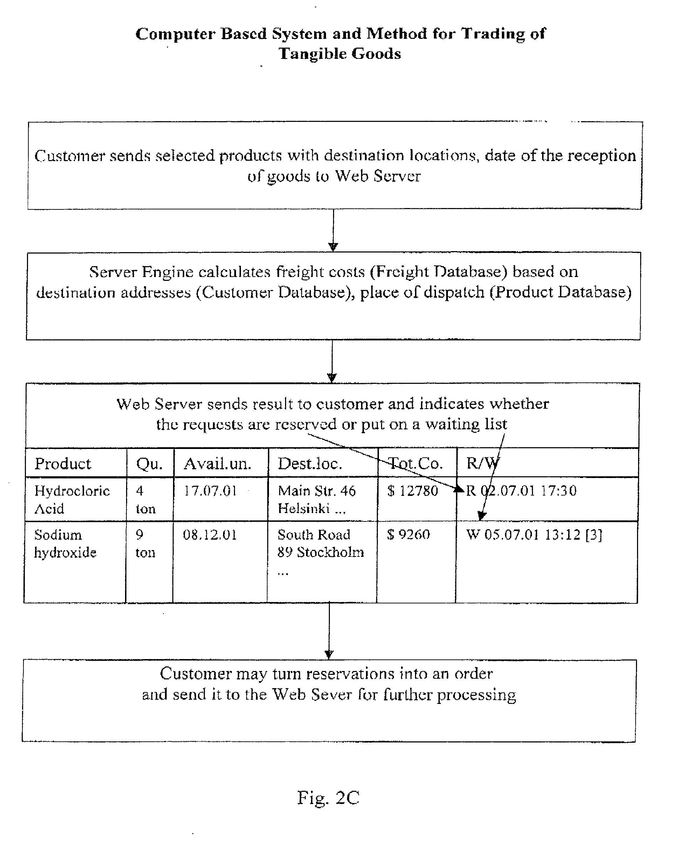

As shown in Fig. 2 outlining an exemplary high level flow diagram of the trading process, when potential customers (Clients) have logged into the system via i.e. an electronic network for the first time, an enrollment procedure is carried out in order to retrieve the relevant information required for the trading process. In this process a unique and preferably permanent ID is generated for each customer by the Server. The clients have to specify at least one destination for the goods in the form of a delivery address. If a Client has several destinations for the goods, he must specify the address for each destination. This data is stored by the Server in the Customer Database. The information requested or retrieved from the clients in the enrollment procedure or in future logging in procedures and stored in the C-DB may also comprise additional data like how he wants to receive specific messages from the system or Server in the future.

When logging in into the system via a communication link, the Server identifies the client/customer and maps its ID and the destinations of the shipment locations.

The customer can access the product list by requesting the catalogue web page from the SE. The product list is prepared based on the Product Database. The product list at this stage typically shows the type of product, the quantity and the availability. It does not contain price information at this stage but may do so or comprise further information depending on the goods at issue.

The client/customer selects products into a reservation cart. He has to specify the date and time when the selected products have to be at his desired shipment destination.

If the client/customer has several shipment destinations, he must also choose the shipment location for each reservation. In this case the SE may generate a specific web page for the client/customer based on the Customer Database on which the possible locations can be selected.

After the client/customer has selected the product and has specified an amount and the date/time of delivery and, if applicable, a destination location out of several possibilities, this data is send to the SE, preferably upon activation of a reservation button. The SE receives the data and, by reference to the Order/Reservation Database, checks for availability of the product and if there already exist previous reservations for the product.

If the desired product is available, the freight calculation routine starts. The SE checks in the Freight Database against several criteria, i.e. place of dispatch (from Product Database) and place of delivery/destination, date/time, suitable transportation facility in relation to destination and dispatch and type of product. It also calculates the freight costs by referring to the data in the Freight Database based on the Destination Location (from Customer Database) and type of product and place of dispatch (from Product Database).

If the desired product is not available or the transportation is not possible, a qualified message is send from the SE to inform the client/customer. If an alternative offering is possible (like less amount of product or other time of shipment) the customer will be informed. Alternative offerings may be automatically determined or selected by the SE so as to be as close as possible to the original reservation request. Several alternatives may be generated in descending order. The SE sends a Web page with qualified information and if possible, alternative offers to the client/customer. The client/customers can select one of these alternatives, add or amend data and return it as new reservation request which is re-processed as the previous request.

If the reservation and freight is possible, the calculated freight costs are added to the product costs. The SE generates a web page, which includes product, costs including freight, shipping place and shipping date and and sends it to the client/customer. The client/customer has to confirm the reservation, to turn the reservation into an order or to abandon the reservation. The confirmed reservation can be maintained valid by the SE for a predetermined time frame (e.g. 24 hours) and will be deleted by the SE after expiry of the term and can be accessed and turned into an order by the client within this period.

If the reservation was not possible due to pending previous other reservations and the customer has a chance that his reservation request may qualify as a valid reservation after expiry or abandonment of preceding reservations, the SE creates a waiting list for the product and generates a Web page informing the client/customer of this waiting list including the above mentioned reservation related data like product, amount, costs including freight etc.. As shown in Fig. 2C this information may also be presented in the form of a status flag with relevant information like expiry of waiting status and number of preceding reservations in the web page together with products where reservation is possible.

If other clients/customers are deleting their preceding reservations and a reservation on the waiting list can get valid, the SE updates the Order/Reservation Database and generates a message for the client/customer. The message may be sent via email, SMS or other instant messaging systems in accordance with preferences stored in the Customer Database. When the client/customer subsequently accesses the Server in the system after the state has turned from waiting to reservation, the SE generates an updated web page with a product list where the state has turned form waiting to reservation. In response, the client/customer can now order, confirm the reservation for the predetermined time frame or abandon the reservation or initiate an alternative request which is processed by the SE as described above.

With each action of the clients/customers the SE updates the Order/Reservation DB that includes product, date/time of order or reservation termination and the ordered or reserved amount. In addition, the Product DB is updated with the ordered or reserved amount of the specified products. The SE also updates the Freight DB and reserves the freight capacities associated with the ordered or reserved products.

Each time a client/customer logs into the System, his current valid reservations and orders are displayed. The list has buttons or tags to turn pending reservations into orders. If the customer has selected a reservation into the order cart and has sent the orders to the SE, i.e. by clicking to a "Send Orders" button, the SE processes the list and checks if the product is still available (other customers may have ordered the product just before). If the particular product is still available, the SE calculates the remaining amount of the product and updates the Product Database. The SE turns the flag from reservation to order in the Reservation/Order Database. In addition, the Product- and the Freight Databases are updated. The SE automatically generates and sends a Web page to the client/customer confirming that the order was accepted or rejected and indicating the items ordered as well as their price including the freight costs. The SE automatically sends the order information (product, amount, date of shipment etc.) to the ERP System of the product supplier and of the transporting agent or freight company. This information may also be sent via an email and processed manually.

The SE also includes a routine which deletes invalid product reservations. If the time frame of the reservation has terminated, the SE deletes the reservations in the Order/Reservation Database and updates the Product Database by turning off the reservation flag.

The system of the present invention can be modified or completed by additional functionality.

This may comprise a routine which gets into action, when the place of dispatch or destination location is not available in the Freight Database. In this routine the SE sends a request into a GEO-MAP System and retrieves an alternative dispatch and/or destination location. The SE generates a specific web page informing the client/customer of these alternatives when the client/customer gets his reservation request reply. The client/customer can either accept the alternative destination or abandon the reservation.

The SE may also check in the Freight Database, if there are special discounts possible by shipping the freight on particular days, e.g. utilizing opportunities for empty re-shipments. In this case, too, the SE automatically generates a web page with a list or a graphical chart indicating the alternative costs and corresponding alternative delivery date/time and sends it to the client/customer when the client/customer gets his reservation request reply. The client/customer can either accept or chose any of the alternatives, i.e. by clicking on a button, or ignore them.

The SE may also check in the Fright DB, if there are special discounts possible by ordering a specific amount. If for example the typical order amounts of a particular product are 16, 24 and 32 tons, respectively, the SE automatically generates a web page with a list or a graphical chart indicating the alternative amounts and the corresponding costs and sends it to the client/customer when the client/customer gets his reservation request reply. The client/customer can either chose any of the alternatives, i.e. by clicking on a button, or ignore them.

If a client/customer has placed reservations on several products with different shipping dates, the SE may check in the Freight DB in order to determine if there is a discount available by bundling products. If bundling is possible, the SE automatically generates a web page with a list indicating the alternative fright bundling options and the corresponding costs and sends it to the client/customer when the client/customer gets his reservation request reply. The client/customer can either chose any of the alternatives, i.e. by clicking on a button, or ignore them.

If a customer has several destination locations and has placed reservations on several products, the SE may check whether a discount is available by optimizing shipping distances. For each reservation, the SE calculates the distances between the several destination locations and possible places of dispatch and stores it in the Location/Distance DB. By evaluating this data, the SE determines the most cost effective route and automatically generates a web page with a list or a graphical chart indicating the alternative shipping dates or routes and the corresponding costs and sends it to the client/customer when the client/customer gets his reservation request reply. The client/customer can either chose any of the alternatives, i.e. by clicking on a button, or ignore them.

## Claims

1. A computer based system for trading tangible goods via an electronic communication system including:
a server having access to a freight database and a product database;
said product database being regularly updated with relevant data related to the goods that are to be traded through the system, said data comprising at least information on the type of product, of the place of dispatch of the product and of the cost of the product;
said freight database being regularly updated with relevant data related to the transportation of the goods traded through the system, said data comprising at least information on the cost of transportation;
said server being adapted to automatically generate upon request of a client through said electronic communication system a product list of available products based on the product database and to transmit the same to said client through said electronic communication system;
said server being adapted to receive through said electronic communication system a particular request for a particular product from said client and at least information on a particular destination location for the transportation of said particular product; and
said server being adapted to automatically determine the transportation cost for the particular product to said particular destination location by reference to said product database and said freight database, to create a client specific offer for said product comprising at least the transportation cost and the product cost, and to transmit the offer back to said client through said electronic communication system.

2. The computer based system for trading tangible goods as defined in claim 1, wherein said product database and said freight database are updated by one or more supplier(s) of the products and by one or more freight company(ies), respectively, via said electronic communication system.

3. The computer based system for trading tangible goods as defined in claim 1 or 2, wherein said server has access to a customer database in which destination location(s) is/are stored for a particular client and said server is adapted to obtain the destination location(s) of said particular client from said customer database by utilizing a unique ID assigned to said particular client.

4. The computer based system for trading tangible goods as defined in claim 1, 2 or 3, wherein said server is adapted to determine, upon creating said client specific offer for said particular product, a sequence of mutually excluding requests and to assign a reservation status to offers that can be fulfilled and a waiting status to requests that cannot be fulfilled.

5. The computer based system for trading tangible goods as defined in claim 4, wherein said server is adapted to automatically assign a predetermined time frame to said offers when said reservation status is assigned, to automatically delete said offer(s) after lapse of said time frame, to automatically change a consecutive request having the waiting status to an offer having a reservation status after determination that the consecutive request can be fulfilled after deletion of said deleted offer, and to automatically inform the client having made the consecutive request of the change of status.

6. The computer based system for trading tangible goods as defined in any one of claims 2 to 5 in combination with claim 2, wherein said server is adapted to receive an order from said particular client corresponding to said particular offer, to automatically update the product and freight databases and to send execution requests to supplier(s) of the products and freight company(ies) based on the data in the product and freight databases.

7. The computer based system for trading tangible goods as defined in any one of claims 1 to 6, wherein said product database contains data comprising transportation related properties of the products/goods, specific amounts available, and availability dates.

8. The computer based system for trading tangible goods as defined in any one of claims 1 to 7, wherein said freight database contains data comprising transport capacities, means of transportation, time/availability, available routes or destinations and product related properties of the means of transportation.

9. The computer based system for trading tangible goods as defined in any one of claims 1 to 8, wherein said electronic communication system includes the Internet and/or LAN (Local Area Network)) and/or WAN (Wide Area Network).

10. A method of trading tangible goods via an electronic communication system including the steps of:
maintaining a freight database and a product database;
regularly updating said product database with relevant data related to the goods that are to be traded through the system, said data comprising at least information on the type of product, of the place of dispatch of the product and of the cost of the product;
regularly updating said freight database with relevant data related to the transportation of the goods traded through the system, said information comprising at least information on the cost of transportation;
automatically generating upon request of a client through said electronic communication system a product list of available products based on the product database and transmitting the same to said client through said electronic communication system;
receiving through said electronic communication system a particular request for a particular product from said client and at least information on a particular destination location for the transportation of said particular product; and
automatically determining the transportation cost for the particular product to said particular destination location by reference to said product database and said freight database, creating a client specific offer for said product comprising at least the transportation cost and the product cost, and transmitting the offer back to said client through said electronic communication system.

11. The method of trading tangible goods as defined in claim 10, wherein said product database and said freight database are updated by one or more supplier(s) of the products and by one or more freight company(ies), respectively, via said electronic communication system.

12. The method of trading tangible goods as defined in claim 10 or 11, further comprising the step of maintaining a customer database in which destination location(s) is/are stored for a particular client and obtaining the destination location(s) of said particular client from said customer database by utilizing a unique ID assigned to said particular client.

13. The method of trading tangible goods as defined in claim 10, 11 or 12, wherein said server is adapted to determine, upon creating said client specific offer for said particular product, a sequence of mutually excluding requests and to assign a reservation status to offers that can be fulfilled and a waiting status to requests that cannot be fulfilled.

14. The method of trading tangible goods as defined in claim 13, further comprising the steps of automatically assigning a predetermined time frame to said offers when said reservation status is assigned, automatically deleting said offer(s) after lapse of said time frame, automatically changing a consecutive request having the waiting status to an offer having a reservation status after determination that the consecutive request can be fulfilled after deletion of said deleted offer, and automatically informing the client having made the consecutive request of the change of status.

15. The method of trading tangible goods as defined in any one of claims 10 to 14 in combination with claim 11, further comprising the steps of receiving an order from said particular client corresponding to said particular offer, automatically updating the product and freight databases and sending execution requests to supplier(s) of the products and freight company(ies) based on the data in the product and freight databases.

16. The method of trading tangible goods as defined in any one of claims 10 to 15, wherein said product database contains data comprising transportation related properties of the products/goods, specific amounts available, and availability dates.

17. The method of trading tangible goods as defined in any one of claims 10 to 16, wherein said freight database contains data comprising transport capacities, means of transportation, time/availability, available routes or destinations and product related properties of the means of transportation.

18. The method of trading tangible goods as defined in any one of claims 10 to 17, wherein said electronic communication system includes the Internet and/or LAN (Local Area Network)) and/or WAN (Wide Area Network).
